# EUROPÄISCHE PATENTSCHRIFT

(11) **EP 3 947 887 B1**
(45) Veröffentlichungstag und Bekanntmachung des Hinweises auf die Patenterteilung: **22.02.2023**
(21) Anmeldenummer: 20725447.5
(22) Anmeldetag: 04.05.2020
(51) Int. Cl.: E06B 3/968

(54) **METALLISCHER ECKVERBINDER**
METAL CORNER CONNECTOR
RACCORD ANGULAIRE MÉTALLIQUE

(30) Priorität: 29.05.2019 DE 102019207902
(43) Veröffentlichungstag der Anmeldung: 09.02.2022
(73) Patentinhaber: Siemens Mobility GmbH, 81739 München (DE)
(72) Erfinder: BLISSE, Johannes, 91080 Spardorf (DE); DORNBERGER, Peter, 90489 Nürnberg (DE); HOFFMANN, Alexander, 90765 Fürth (DE)
(86) Internationale Anmeldenummer: PCT/EP2020/062247
(87) Internationale Veröffentlichungsnummer: WO 2020/239361

(56) Entgegenhaltungen:
- EP-A2- 2 868 856
- CN-A- 108 678 621
- DE-A1-102017 126 456
- DE-U1- 20 316 758
- FR-A1- 3 012 839
- FR-A5- 2 115 787

## Beschreibung

Es werden ein metallischer Eckverbinder mit einer ersten Hauptfläche und einer zweiten Hauptfläche, die jeweils parallel zu einer Haupterstreckungsebene des metallischen Eckverbinders ausgerichtet sind, und mit mindestens zwei Verbindungsbereichen , die an einer Seitenfläche des metallischen Eckverbinders angeordnet sind, ein Verfahren zur Herstellung einer Vorrichtung mit einem metallischen Eckverbinder, eine Vorrichtung mit einem metallischen Eckverbinder und ein Schienenfahrzeug mit einem metallischen Eckverbinder angegeben.

Ein solcher metallischer Eckverbinder ist aus der CN 108 678 621 A bekannt. Weitere Ausführungsformen für metallische Eckverbinder ergeben sich aus der FR 3 012 839 A1, der EP 2 868 856 A2, der DE 203 16 758 U1, der DE 10 2017 126456 A1 und der FR 2 115 787 A5.

Es soll ein metallischer Eckverbinder bereitgestellt werden, der mindestens zwei metallische Rohre in einem beliebigen Winkel miteinander mit sehr hoher mechanischer Stabilität mechanisch verbindet. Außerdem soll ein Verfahren zur Herstellung einer Vorrichtung mit einem derartigen metallischen Eckverbinder, eine Vorrichtung mit einem solchen metallischen Eckverbinder und ein Schienenfahrzeug mit einem solchen Eckverbinder angegeben werden.

Diese Aufgaben werden durch einen metallischen Eckverbinder mit den Merkmalen des Patentanspruchs 1, durch ein Verfahren mit den Schritten des Patentanspruchs 9, durch eine Vorrichtung mit den Merkmalen des Patentanspruchs 12 und durch ein Schienenfahrzeug mit den Merkmalen des Patentanspruchs 14 gelöst.

Vorteilhafte Ausführungsformen und Weiterbildungen des metallischen Eckverbinders, des Verfahrens, der Vorrichtung und des Schienenfahrzeugs sind Gegenstand der jeweils abhängigen Ansprüche.

Gemäß einer Ausführungsform umfasst der metallische Eckverbinder mindestens zwei Verbindungsbereiche, die an einer Seitenfläche des metallischen Eckverbinders angeordnet sind. Besonders bevorzugt weist der metallische Eckverbinder eine erste Hauptfläche und eine gegenüberliegende parallel verlaufende zweite Hauptfläche auf, zwischen der die Seitenfläche des metallischen Eckverbinders angeordnet ist.

Gemäß einer Ausführungsform des metallischen Eckverbinders ist mindestens ein Verbindungsbereich dazu eingerichtet, mit einem metallischen Rohr, das sich entlang einer Haupterstreckungsebene des metallischen Eckverbinders erstreckt, durch Schweißen mechanisch stabil verbunden zu werden. Besonders bevorzugt wird beim Schweißen zumindest teilweise eine HV-Schweißnaht erzeugt. Dies führt zu einer mechanisch sehr stabilen Verbindung zwischen dem metallischen Rohr und dem metallischen Eckverbinder.

Gemäß einer Ausführungsform umfasst das metallische Rohr eine metallische Wand, die einen Hohlraum begrenzt. Mit anderen Worten ist das metallische Rohr innen hohl.

Im Folgenden werden Merkmale und Ausführungsformen des Verbindungsbereichs in der Einzahl näher beschrieben. Der metallische Eckverbinder weist mindestens zwei Verbindungsbereiche auf, wobei jeder der Verbindungsbereiche die im Folgenden beschriebenen Ausführungsformen und Merkmale aufweisen kann.

Gemäß einer Ausführungsform umfasst der Verbindungsbereich mindestens einen Vorsprung. Besonders bevorzugt umfasst der Vorsprung eine Nut, die zur Aufnahme eines Schweißmaterials während des Schweißens vorgesehen und eingerichtet ist. Bei dem Schweißmaterial handelt es sich in der Regel um Material des zu verbindenden metallischen Rohrs und/oder um Material der anzubringenden Schweißnaht. Mit anderen Worten ist die Nut bevorzugt als Schweißbadsicherung ausgebildet. Dies führt zu einer besonders stabilen mechanischen Verbindung zwischen dem metallischen Rohr und dem metallischen Eckverbinder.

Gemäß einer Ausführungsform weist der Verbindungsbereich eine Außenfläche auf, die an den Vorsprung angrenzt und als Auflagefläche für eine Stirnseite des metallischen Rohrs eingerichtet ist. Mit anderen Worten dient die Außenfläche des Verbindungsbereichs beim Aufsetzen des metallischen Rohrs auf den Verbindungsbereich bevorzugt als Anschlag. So vereinfacht die Außenfläche eine Positionierung des metallischen Rohrs deutlich. Mit Hilfe des Verbindungsbereichs kann mit Vorteil in der Regel eine Ausrichtung des zu verbindenden metallischen Rohrs erzielt werden, die in der Länge nicht mehr als +/- 1 Millimeter von einem vorgegebenen Wert abweicht, während die Winkeltreue der Ausrichtung besonders bevorzugt kleiner oder gleich 1° ist.

Gemäß einer Ausführungsform des metallischen Eckverbinders weist der Verbindungsbereich einen Innenbereich auf, der zumindest teilweise durch den Vorsprung begrenzt ist. Hierbei verläuft eine Frontfläche des Vorsprungs besonders bevorzugt plan mit einer der beiden Hauptflächen des metallischen Eckverbinders. Besonders bevorzugt ist der Verbindungsbereich einstückig mit dem metallischen Eckverbinder ausgebildet. Mit anderen Worten ist der Verbindungsbereich bevorzugt nicht durch eine Grenzfläche von dem restlichen Volumen des metallischen Eckverbinders abgegrenzt. Insbesondere ist der Verbindungsbereich bevorzugt nicht separat von dem restlichen Volumen des metallischen Eckverbinders hergestellt und anschließend zusammengefügt.

Gemäß einer bevorzugten Ausführungsform weist der Verbindungsbereich einen rechteckigen Innenbereich auf. Ein derartiger Verbindungsbereich ist insbesondere dazu vorgesehen, mit einem metallischen Vierkantrohr verbunden zu werden. Besonders bevorzugt weist der Verbindungsbereich mit dem rechteckigen Innenbereich zwei gegenüberliegende stegförmige Vorsprünge auf. Die zwei gegenüberliegenden stegförmigen Vorsprünge begrenzen den Innenbereich bevorzugt. Beispielsweise verlaufen Frontflächen der stegförmigen Vorsprünge hierbei jeweils plan mit einer der beiden Hauptflächen des metallischen Eckverbinders.

Gemäß einer weiteren Ausführungsform des metallischen Eckverbinders weist der Verbindungsbereich einen Innenbereich auf, der zumindest teilweise durch den Vorsprung begrenzt ist, wobei eine Frontfläche des Vorsprungs zu einer der beiden Hauptflächen des metallischen Eckverbinders zurückversetzt angeordnet ist. Auf diese Art und Weise entsteht besonders bevorzugt eine den Innenbereich vollständig umlaufende Außenfläche, die als Auflagefläche für das metallische Rohr eingerichtet ist. Bei dieser Ausführungsform ist es mit Vorteil möglich, bei einem Schweißen des metallischen Rohrs an den metallischen Eckverbinder vollständig umlaufend um den Umfang des zu verbindenden metallischen Rohrs eine HV-Schweißnaht anzubringen. Dies führt zu einer besonders stabilen mechanischen Verbindung zwischen dem metallischen Eckverbinder und dem metallischen Rohr.

Auch bei dieser Ausführungsform des metallischen Eckverbinders ist es möglich, dass der Verbindungsbereich einen rechteckigen Innenbereich aufweist, der durch zwei gegenüberliegende stegförmige Vorsprünge begrenzt ist. In diesem Fall sind die Frontflächen der stegförmigen Vorsprünge jeweils zu einer der beiden Hauptflächen des metallischen Eckverbinders zurückversetzt angeordnet.

Gemäß einer weiteren Ausführungsform des metallischen Eckverbinders umläuft der Vorsprung den Innenbereich des Verbindungsbereichs vollständig. Bei dieser Ausführungsform ist auch die Nut in dem Vorsprung besonders bevorzugt vollständig umlaufend in dem Vorsprung ausgebildet. Bei dieser Ausführungsform kann mit besonderem Vorteil vollständig umlaufend um den Umfang des zu verbindenden metallischen Rohrs eine HV-Schweißnaht ausgebildet werden und gleichzeitig eine besonders gute Verankerung der Schweißnaht durch die Nut erzielt werden.

Gemäß einer bevorzugten Ausführungsform des metallischen Eckverbinders weist der metallische Eckverbinder ein stranggepresstes Metall auf oder ist aus einem stranggepressten Metall gebildet. Eine Strangpressrichtung des Metalls verläuft hierbei bevorzugt von der ersten Hauptfläche des metallischen Eckverbinders zu der zweiten Hauptfläche des metallischen Eckverbinders oder umgekehrt. Die Verwendung eines stranggepressten Metalls vereinfacht die Herstellung des metallischen Eckverbinders und senkt somit dessen Herstellungskosten. Beispielsweise weist der metallische Eckverbinder eine stranggepresste Aluminiumlegierung auf oder ist aus einer stranggepressten Aluminiumlegierung gebildet. Ein metallischer Eckverbinder aus einer Aluminiumlegierung ist mit Vorteil besonders leicht.

Gemäß einer weiteren Ausführungsform weist der metallische Eckverbinder mindestens eine Öffnung auf, die den metallischen Eckverbinder senkrecht zur Haupterstreckungsebene vollständig durchdringt. Beispielsweise ist die Öffnung rund, eckig oder kreisförmig ausgebildet. Besonders bevorzugt ist die Öffnung dazu eingerichtet, den metallischen Eckverbinder mit einem weiteren Element über ein Verbindungsmittel mechanisch zu verbinden. Bei dem Verbindungselement kann es sich um eine Schraube, einen Bolzen oder eine Niete handeln. Die Öffnung kann als Bohrung ausgebildet sein.

Gemäß einer weiteren Ausführungsform umfasst der metallische Eckverbinder mindestens eine Aussparung, die den metallischen Eckverbinder senkrecht zur Haupterstreckungsebene vollständig durchdringt. Die Aussparung dient bevorzugt zur Gewichtsreduktion. Die Aussparung weist besonders bevorzugt eine unregelmäßige Form auf. Beispielsweise umfasst der metallische Eckverbinder zwischen benachbarten Aussparungen lediglich Rippen, die für die mechanische Stabilität des metallischen Eckverbinders verantwortlich sind.

Der vorliegend beschriebene metallische Eckverbinder kann mit dem im Folgenden beschriebenen Verfahren mit einem metallischen Rohr zu einer Vorrichtung verbunden werden. Merkmale und Ausführungsformen, die vorliegend in Verbindung mit dem metallischen Eckverbinder beschrieben sind, können auch bei dem Verfahren ausgebildet sein und umgekehrt.

Gemäß einer Ausführungsform des Verfahrens wird ein metallischer Eckverbinder bereitgestellt, wie er bereits beschrieben wurde. In einem nächsten Schritt wird ein metallisches Rohr auf den Verbindungsbereich des metallischen Eckverbinders aufgesetzt, sodass eine Stirnseite des metallischen Rohrs an die Außenfläche des Verbindungsbereichs anstößt. Anschließend wird das metallische Rohr mit dem metallischen Eckverbinder durch Schweißen mechanisch stabil verbunden. Hierbei wird besonders bevorzugt zumindest teilweise eine HV-Schweißnaht erzeugt.

Gemäß einer besonders bevorzugten Ausführungsform des Verfahrens weist die Wand des metallischen Rohrs in dem an die Außenfläche des Verbindungsbereichs angrenzenden Teil eine Strukturierung für das Schweißverfahren (Schweißnahtvorbereitung) auf. Hierbei handelt es sich beispielsweise um eine Fase. Insbesondere mit Hilfe einer Fase kann beim Schweißen eine HV-Schweißnaht erzielt werden.

Die mit dem Verfahren erzeugte Vorrichtung wird im Folgenden näher erläutert. Merkmale und Ausführungsformen, die vorliegend in Verbindung mit dem Verfahren beschrieben sind, können auch bei der Vorrichtung ausgebildet sein und umgekehrt. Auch sämtliche Merkmale und Ausführungsformen, die in Verbindung mit dem metallischen Eckverbinder beschrieben sind, können bei der Vorrichtung ausgebildet sein und umgekehrt.

Gemäß einer Ausführungsform umfasst die Vorrichtung einen metallischen Eckverbinder und ein metallisches Rohr, das sich entlang einer Haupterstreckungsebene des metallischen Eckverbinders erstreckt. Hierbei ist das metallische Rohr mit dem metallischen Eckverbinder durch eine Schweißnaht mechanisch stabil verbunden.

Gemäß einer bevorzugten Ausführungsform umfasst die Vorrichtung einen metallischen Eckverbinder mit mindestens zwei Verbindungsbereichen, die an einer Seitenfläche des metallischen Eckverbinders angeordnet sind. Außerdem umfasst die Vorrichtung bei dieser Ausführungsform ein metallisches Rohr, das sich entlang einer Haupterstreckungsebene des metallischen Eckverbinders erstreckt. Hierbei umfasst mindestens einer der Verbindungsbereiche einen Vorsprung mit einer Nut und eine Außenfläche, die an den Vorsprung angrenzt. Die Außenfläche dient hierbei besonders bevorzugt als Auflagefläche für eine Stirnseite des metallischen Rohrs. Das metallische Rohr ist bei dieser Ausführungsform mit dem metallischen Eckverbinder durch eine Schweißnaht mechanisch stabil verbunden, wobei ein Schweißmaterial der Schweißnaht in der Nut angeordnet ist.

Gemäß einer Ausführungsform ist der metallische Eckverbinder oder die Vorrichtung Teil eines Schienenfahrzeugs.

Die Vorrichtung ist bevorzugt dazu eingerichtet, als Tragevorrichtung in einem Schienenfahrzeug, wie beispielsweise einem Zug oder einem Triebwagen, zu dienen. In der Tragevorrichtung können beispielsweise funktionelle Geräte des Schienenfahrzeugs befestigt werden. Insbesondere ist die Vorrichtung bevorzugt dazu geeignet, mit einer Tragelast von ungefähr 50 kg bis ungefähr 400 kg beaufschlagt zu werden. Insbesondere kann mit dem hier beschriebenen metallischen Eckverbinder und dem hier beschriebenen Verfahren eine leichte, mechanisch stabile Vorrichtung mit hoher Tragekraft auf einfache Art und Weise erzielt werden.

Der metallische Eckverbinder beruht unter anderem auf der Idee, einen Verbindungsbereich mit einer Außenfläche bereitzustellen, die als Anschlag für ein zu verbindendes metallisches Rohr dient. Hierbei ist es möglich, das metallische Rohr mit einer entsprechenden Strukturierung zu versehen, sodass eine HV-Schweißnaht zwischen dem metallischen Verbindungsbereich und dem metallischen Rohr erzeugt werden kann. So kann eine mechanisch besonders stabile Verbindung erzeugt werden.

Der metallische Eckverbinder ist weiterhin derart ausgestaltet, dass er besonders bevorzugt aus einem stranggepressten Metall erzeugt werden kann, das gar nicht oder nur geringfügig nachbearbeitet werden muss. Dies verringert die Herstellungskosten des metallischen Eckverbinders.

Auf Grundlage einer Vorrichtung mit dem metallischen Eckverbinder und einem derart verbundenen metallischen Rohr kann eine leichte und sehr stabile Tragevorrichtung erzeugt werden, die eine hohe Tragkraft aufweist.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
die Figuren 1 und 2 schematische Darstellungen eines metallischen Eckverbinders gemäß einem Ausführungsbeispiel,
die Figuren 3 bis 5 jeweils eine perspektivische Darstellung eines metallischen Eckverbinders gemäß einem Ausführungsbeispiel,
die Figuren 6 bis 7 jeweils eine schematische Schnittdarstellung von Stadien eines Verfahrens zur Herstellung einer Vorrichtung mit einem metallischen Eckverbinder und einem metallischen Rohr gemäß einem Ausführungsbeispiel,
die Figur 8 eine schematische Schnittdarstellung einer Vorrichtung gemäß einem Ausführungsbeispiel,
die Figur 9 eine perspektivische Darstellung eines metallischen Eckverbinders gemäß einem Ausführungsbeispiel,
die Figuren 10 bis 13 schematische Darstellungen der Verbindung zwischen dem metallischen Rohr und den metallischen Eckverbindern gemäß verschiedenen Ausführungsbeispielen,
die Figur 14 eine Verbindung eines metallischen Eckverbinders mit einem metallischen Rohr bei einem Stadium eines Verfahrens gemäß einem weiteren Ausführungsbeispiel, und
die Figur 15 eine schematische Darstellung eines Schienenfahrzeugs gemäß einem Ausführungsbeispiel zeigen.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

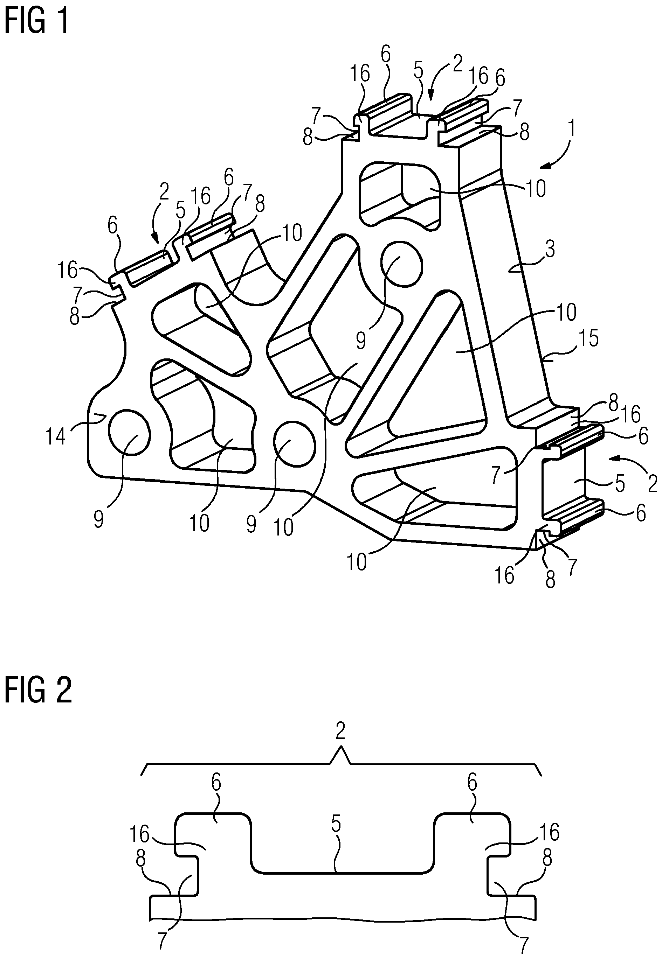

Der metallische Eckverbinder 1 gemäß dem Ausführungsbeispiel der Figuren 1 und 2 weist drei Verbindungsbereiche 2 auf, die an einer Seitenfläche 3 des metallischen Eckverbinders 1 angeordnet sind. Der metallische Eckverbinder 1 weist eine erste Hauptfläche 14 und eine zweite Hauptfläche 15 auf, die jeweils parallel zu einer Haupterstreckungsebene des metallischen Eckverbinders 1 ausgerichtet sind.

Bei dem vorliegenden Ausführungsbeispiel sind die Verbindungsbereiche 2 gleichartig ausgebildet. Jeder Verbindungsbereich 2 ist dazu eingerichtet, mit einem metallischen Rohr 4, das sich entlang der Haupterstreckungsebene des metallischen Eckverbinders 1 erstreckt, durch Schweißen mechanisch stabil verbunden zu werden.

Jeder Verbindungsbereich 2 weist einen rechteckigen Innenbereich 5 auf, der an zwei gegenüberliegenden Seiten jeweils durch einen Vorsprung 6 begrenzt ist. Die Vorsprünge 6 sind hierbei stegartig ausgebildet und weisen eine Nut 7 auf, die sich jeweils entlang einer Seitenfläche des stegartigen Vorsprungs 6 erstreckt. Die Nut 7 ist dazu eingerichtet, ein Schweißmaterial aufzunehmen. Frontflächen 16 der stegförmigen Vorsprünge 6 schließen bei dem vorliegenden Ausführungsbeispiel plan mit der ersten Hauptfläche 14 und der zweiten Hauptfläche 15 des metallischen Eckverbinders 1 ab.

Weiterhin weist jeder Verbindungsbereich 2 eine Außenfläche 8 auf, die direkt an den Vorsprung 6 angrenzt und als Auflagefläche für eine Stirnseite des metallischen Rohrs 4 eingerichtet ist. Die vorliegenden Verbindungsbereiche 2 sind insbesondere dazu eingerichtet, mit einem Vierkantrohr 4 durch Schweißen mechanisch stabil verbunden zu werden. Die Breite zwischen den Außenflächen 8 der beiden gegenüberliegenden stegförmigen Vorsprünge 6 eines Verbindungsbereichs 2 ist hierbei in etwa um das Zweifache kleiner als eine Stärke der Wand des zu verbindenden metallischen Rohrs 4. Mit anderen Worten weist die Außenfläche 8 des Verbindungsbereichs 2 vorliegend eine Breite auf, die der Wandstärke des zu verbindenden metallischen Rohrs 4 entspricht. Auf diese Art und Weise kann das zu verbindende metallische Rohr 4 besonders einfach auf dem Verbindungsbereich 2 positioniert werden.

Der metallische Eckverbinder 1 ist vorliegend aus einer stranggepressten Aluminiumlegierung gebildet. Eine Strangpressrichtung des metallischen Eckverbinders 1 verläuft hierbei von der ersten Hauptfläche 14 des metallischen Eckverbinders 1 zu der zweiten Hauptfläche 15 des metallischen Eckverbinders 1 oder umgekehrt.

Weiterhin weist der metallische Eckverbinder 1 drei Öffnungen 9 auf, die vorliegend als Bohrungen ausgebildet sind. Durch die Bohrungen können weitere Elemente an dem metallischen Eckverbinder 1 befestigt werden, beispielsweise mit Hilfe von Schrauben.

Außerdem weist der metallische Eckverbinder 1 mehrere Aussparungen 10 mit unterschiedlichen unregelmäßigen Formen auf, die zur Gewichtsreduktion dienen. Die Seitenfläche 5 des metallischen Eckverbinders 1 ist durch rippenförmige Stege zwischen den Aussparungen 10 mechanisch stabilisiert.

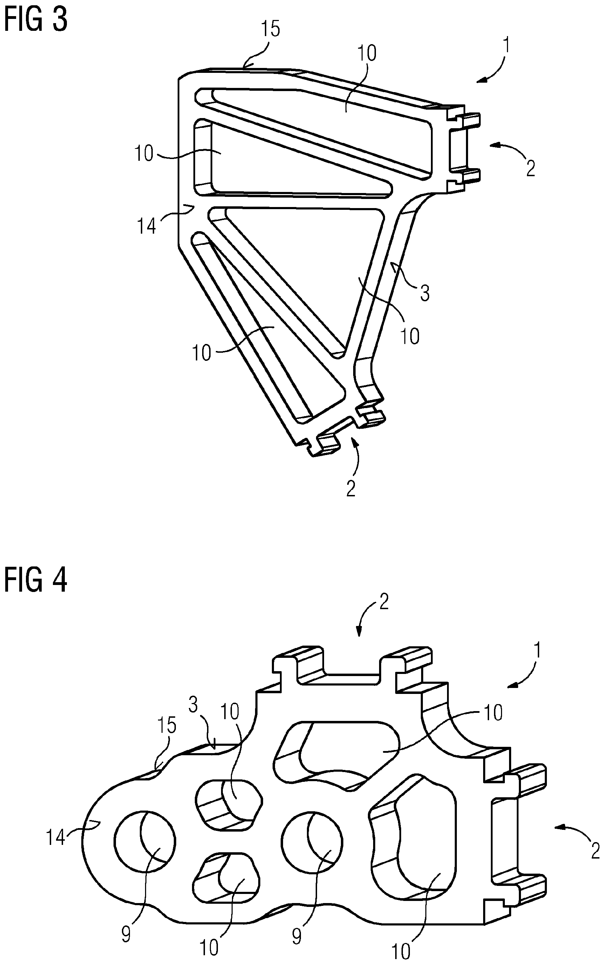

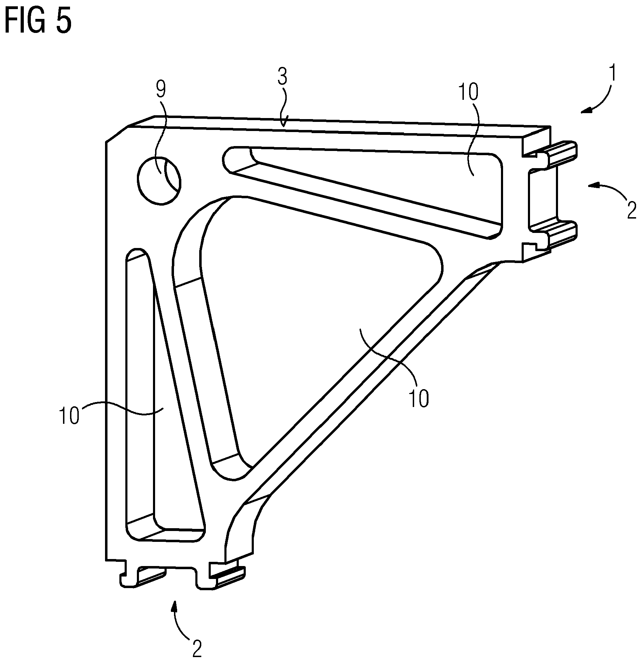

Im Unterschied zu dem metallischen Eckverbinder 1 gemäß dem Ausführungsbeispiel der Figuren 1 und 2 weist der metallische Eckverbinder 1 gemäß den Ausführungsbeispielen der Figuren 3, 4 und 5 jeweils lediglich zwei Verbindungsbereiche 2 auf. Weiterhin ist der metallische Eckverbinder 1 gemäß dem Ausführungsbeispiel der Figur 3 frei von Bohrungen 9 zur weiteren Verbindung mit weiteren Elementen. Insbesondere sind die Verbindungsbereiche 2 der metallischen Eckverbinder 1 gemäß den Figuren 3, 4 und 5 jedoch gleichartig zu den Verbindungsbereichen 2 des metallischen Eckverbinders 1 der Figuren 1 und 2 ausgebildet.

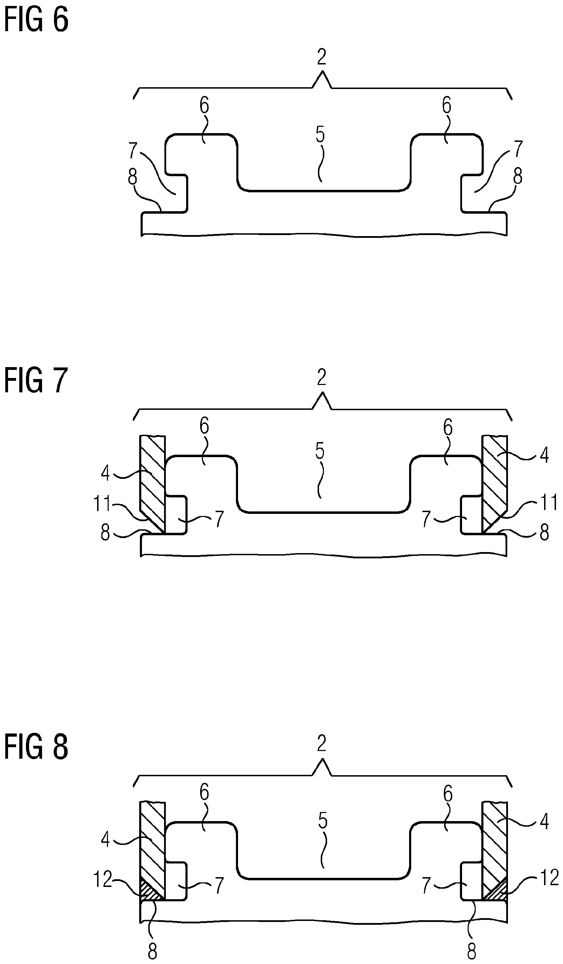

Bei dem Verfahren gemäß dem Ausführungsbeispiel der Figuren 6 bis 7 wird zunächst ein metallischer Eckverbinder 1 bereitgestellt, wie er bereits anhand der Figuren 1 und 2 näher erläutert wurde (Figur 6).

In einem nächsten Schritt wird ein metallisches Rohr auf einen der Verbindungsbereiche aufgesetzt (Figur 7). Eine Stirnseite des metallischen Rohrs 4 stößt hierbei an eine Außenfläche 8 des Verbindungsbereichs 2 an. Der Teil der Wand des metallischen Rohrs 4, der direkt an die Außenfläche 8 angrenzt, ist mit einer Strukturierung 11, vorliegend einer Fase versehen, die zum späteren Schweißen des metallischen Rohrs 4 dient. Beispielsweise ist die Fase Teil einer Schweißnahtvorbereitung. Die Schweißnahtvorbereitung kann der Norm DIN EN 15085-3 entsprechen.

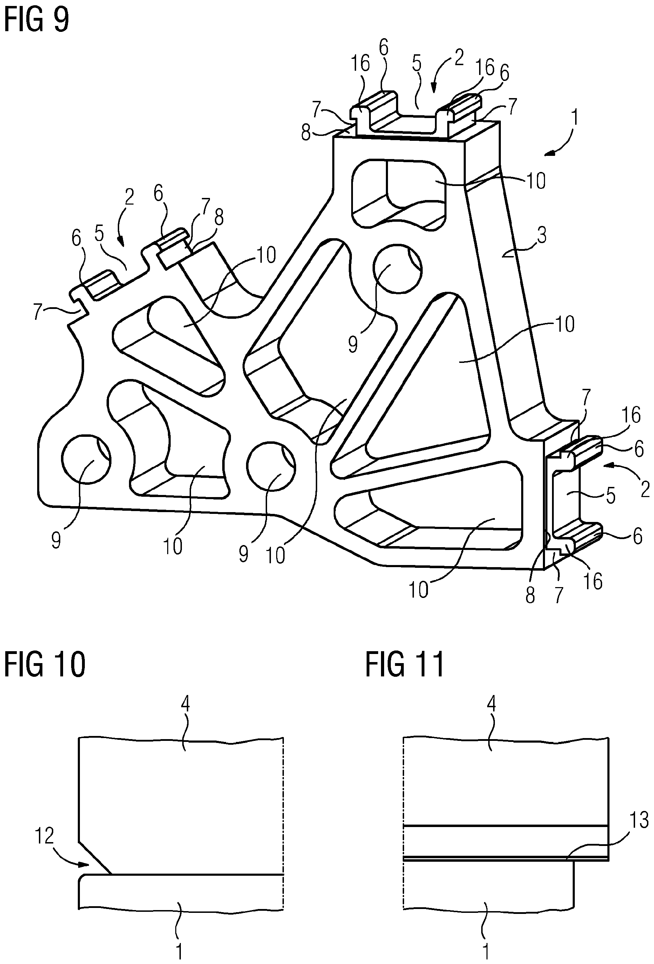

In einem nächsten Schritt wird das metallische Rohr 4 mit dem Verbindungsbereich 2 verschweißt, wobei eine HV-Schweißnaht 12 entsteht und die Nut zumindest teilweise mit dem Material der Schweißnaht und/oder des metallischen Rohrs gefüllt wird. Die HV-Schweißnaht 12 wird vorliegend entlang den beiden stegförmigen Vorsprüngen 6 des Verbindungsbereichs 2 ausgebildet. An den beiden Seiten des Verbindungsbereichs 2, die frei sind von den stegförmigen Vorsprüngen 6, wird das metallische Rohr 4 mit Hilfe einer Kehlschweißnaht 13 stoffschlüssig und mechanisch stabil mit dem metallischen Eckverbinder 1 verbunden (siehe Figur 11).

Die Vorrichtung gemäß dem Ausführungsbeispiel der Figur 8 ist vorliegend mit dem Verfahren gemäß dem Ausführungsbeispiel der Figuren 6 und 7 erzeugt. Die Vorrichtung gemäß dem Ausführungsbeispiel der Figur 8 weist einen metallischen Eckverbinder auf, der mit einer HV-Schweißnaht mechanisch stabil mit einem metallischen Rohr verbunden ist.

Der metallische Eckverbinder 1 gemäß dem Ausführungsbeispiel der Figur 9 unterscheidet sich von dem metallischen Eckverbinder 1 gemäß dem Ausführungsbeispiel der Figuren 1 und 2 in der Ausbildung der Verbindungsbereiche 2. Während bei dem metallischen Eckverbinder 1 gemäß dem Ausführungsbeispiel der Figuren 1 und 2 Frontflächen 16 der stegförmigen Vorsprünge 6 plan mit der ersten Hauptfläche 14 und der zweiten Hauptfläche 15 des metallischen Eckverbinders 1 abschließen, sind die Frontflächen 16 der stegförmigen Vorsprünge 6 gemäß dem Ausführungsbeispiel der Figur 6 gegenüber der ersten Hauptfläche 14 und der zweiten Hauptfläche 15 des metallischen Eckverbinders 1 zurückversetzt angeordnet. Auf diese Art und Weise ist die Außenfläche 8 vollständig umlaufend um den Innenbereich 5 des Verbindungsbereichs 2 ausgebildet. Auf diese Art und Weise dient die Außenfläche 8 umlaufend um den gesamten Umfang des zu verbindenden metallischen Rohrs 4 als Auflagefläche und als Anschlag für das metallische Rohr 4 bei dessen Positionierung.

Bei dieser Ausführungsform kann insbesondere eine HV-Schweißnaht 12 vollständig umlaufend um den gesamten Umfang des zu verbindenden metallischen Rohrs 4 ausgeführt werden. Daher führt diese Ausführungsform des metallischen Eckverbinders 1 mit Vorteil zu einer höheren Festigkeit der Verbindung als der metallische Eckverbinder 1 gemäß dem Ausführungsbeispiel der Figuren 1 und 2. Allerdings erfordert der metallische Eckverbinder 1 gemäß der Figur 9 in der Regel eine größere Nachbearbeitung, beispielsweise mittels Fräsen.

Die bei dem Verfahren gemäß dem Ausführungsbeispiel der Figuren 6 bis 7 entstehende Verbindung zwischen dem metallischen Eckverbinder 1 und dem metallischen Rohr 4 ist schematisch in den Figuren 10 und 11 dargestellt. Figur 10 zeigt eine schematische Darstellung der Verbindung in Strangpressrichtung, also von einer ersten Hauptfläche 14 zu einer zweiten Hauptfläche 15 des metallischen Eckverbinders 1, während Figur 11 eine schematische Darstellung der Verbindung orthogonal zur Strangpressrichtung darstellt. In Strangpressrichtung ist eine HV-Schweißnaht 12 zur Verbindung des metallischen Rohrs 4 mit dem metallischen Eckverbinder 1 angebracht, während orthogonal zur Strangpressrichtung eine Kehlschweißnaht 13 aufgebracht ist.

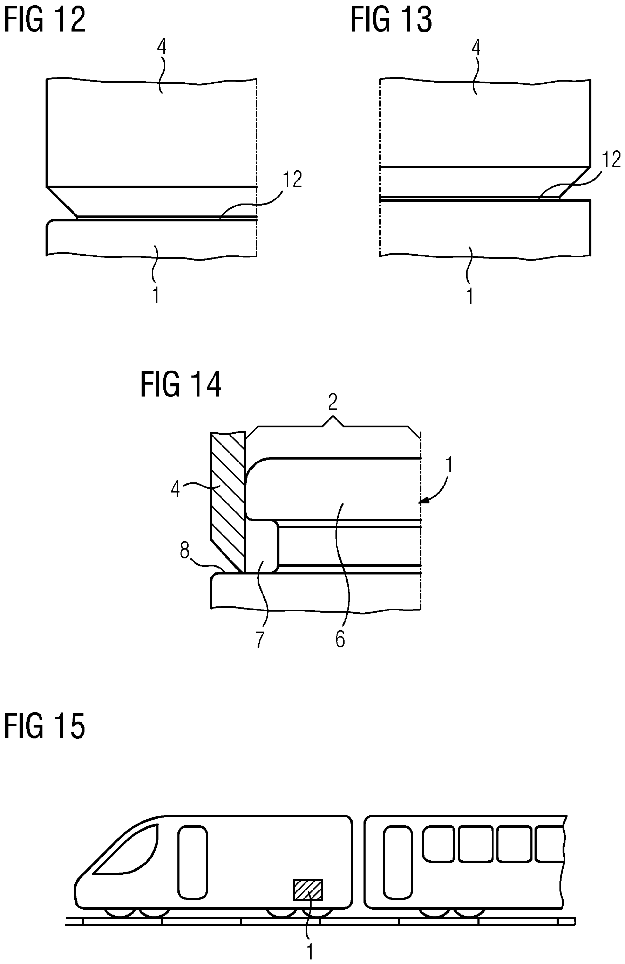

Die Verbindung zwischen einem metallischen Rohr 4 und dem metallischen Eckverbinder 1 gemäß dem Ausführungsbeispiel der Figur 9 ist ausschnittsweise in den Figuren 12 und 13 dargestellt. Die Figur 12 zeigt die Verbindung in Strangpressrichtung und Figur 13 die Verbindung orthogonal zur Strangpressrichtung. Sowohl in Strangpressrichtung als auch orthogonal zur Strangpressrichtung kann hierbei mit Vorteil eine vollständig umlaufendende HV-Schweißnaht 12 erzeugt werden.

Bei dem Verfahren gemäß dem Ausführungsbeispiel der Figur 14 wird ein metallischer Eckverbinder 1 bereitgestellt, der im Unterschied zu dem metallischen Eckverbinder 1 gemäß der Figur 9 einen Verbindungsbereich 2 mit einem rechteckigen Innenbereich 5 aufweist, der vollständig von stegförmigen Vorsprüngen 6 mit einer Nut 7 umlaufen ist.

Bei dem Verfahren gemäß dem Ausführungsbeispiel der Figur 14 wird ein metallisches Vierkantrohr 4 auf den Verbindungsbereich 2 aufgesetzt, dessen Wand vollständig umlaufend auf einer Außenfläche 8 des Verbindungsbereichs 2 aufsetzt. Dann wird vollständig umlaufend um den Umfang des zu verbindenden metallischen Rohrs 4 eine HV-Schweißnaht 12 erzeugt, wobei die den Innenbereich 5 vollständig umlaufende Nut 7 in den stegförmigen Vorsprüngen 6 mit dem Material der HV-Schweißnaht 12 und/oder des metallischen Rohrs 4 gefüllt wird. Auf diese Art und Weise kann eine besonders mechanisch stabile HV-Schweißnahtverbindung erzeugt werden.

Das Schienenfahrzeug gemäß dem Ausführungsbeispiel der Figur 15 weist einen metallischen Eckverbinder auf, wie er beispielsweise anhand der Figuren 1 bis 5 bereits beschrieben wurde.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der durch die beiliegenden Ansprüche definierten Erfindung zu verlassen.

## Patentansprüche

1. Metallischer Eckverbinder (1) mit einer ersten Hauptfläche (14) und einer zweiten Hauptfläche (15), die jeweils parallel zu einer Haupterstreckungsebene des metallischen Eckverbinders (1) ausgerichtet sind, und mit mindestens zwei Verbindungsbereichen (2), die an einer Seitenfläche (3) des metallischen Eckverbinders (1) angeordnet sind,
**dadurch gekennzeichnet, dass**
- mindestens einer der Verbindungsbereiche (2) dazu eingerichtet ist, mit einem metallischen Rohr (4), das sich entlang einer Haupterstreckungsebene des metallischen Eckverbinders (1) erstreckt, durch Schweißen mechanisch stabil verbunden zu werden,
- der Verbindungsbereich (2) mindestens einen Vorsprung (6) mit einer Nut (7) umfasst, die zur Aufnahme eines Schweißmaterials eingerichtet ist, und
- der Verbindungsbereich (2) eine Außenfläche (8) aufweist, die an den Vorsprung (6) angrenzt und als Auflagefläche für eine Stirnseite des metallischen Rohrs (4) eingerichtet ist.

2. Der metallische Eckverbinder (1) nach Anspruch 1,
**dadurch gekennzeichnet, dass**
der Verbindungsbereich (2) einen Innenbereich (5) aufweist, der zumindest teilweise durch den Vorsprung (6) begrenzt ist, wobei eine Frontfläche (16) des Vorsprungs (6) mit einer Hauptfläche (14, 15) des metallischen Eckverbinders (1) plan verläuft.

3. Der metallische Eckverbinder (1) nach Anspruch 1,
**dadurch gekennzeichnet, dass**
der Verbindungsbereich (2) einen Innenbereich (5) aufweist, der zumindest teilweise durch den Vorsprung (6) begrenzt ist,
wobei eine Frontfläche (16) des Vorsprungs (6) zu einer Hauptfläche (14, 15) des metallischer Eckverbinder (1) zurückversetzt angeordnet ist.

4. Der metallische Eckverbinder (1) nach Anspruch 1,
**dadurch gekennzeichnet, dass**
der Vorsprung (6) einen Innenbereich (5) des Verbindungsbereichs (2) vollständig umläuft und die Nut (7) vollständig umlaufend in dem Vorsprung (6) ausgebildet ist.

5. Der metallische Eckverbinder (1) nach einem der obigen Ansprüche,
**dadurch gekennzeichnet, dass**
er ein stranggepresstes Metall aufweist.

6. Der metallische Eckverbinder (1) nach Anspruch 5,
**dadurch gekennzeichnet, dass** er eine stranggepresste Aluminiumlegierung aufweist.

7. Der metallische Eckverbinder (1) nach einem der obigen Ansprüche,
**dadurch gekennzeichnet, dass**
er mindestens eine Öffnung (9) aufweist, die den metallischen Eckverbinder (1) senkrecht zur Haupterstreckungsebene vollständig durchdringt, wobei
die Öffnung (9) zur mechanischen Verbindung des metallischen Eckverbinders (1) mit einem weiteren Element über ein Verbindungsmittel eingerichtet ist.

8. Der metallische Eckverbinder (1) nach einem der obigen Ansprüche,
**dadurch gekennzeichnet, dass**
er mindestens eine Aussparung (10) aufweist, die den metallischen Eckverbinder (1) senkrecht zur Haupterstreckungsebene vollständig durchdringt und zur Gewichtsreduktion dient.

9. Verfahren zur Herstellung einer Vorrichtung umfassend die folgenden Schritte:
- Bereitstellen eines metallischen Eckverbinders (1) nach einem der Ansprüche 1 bis 8,
- Aufsetzen eines metallischen Rohrs (4) auf den Verbindungsbereich (2) des metallischen Eckverbinders (1), so dass eine Stirnseite des metallischen Rohrs (4) an die Außenfläche (8) des Verbindungsbereichs (2) anstößt,
- mechanisch stabiles Verbinden des metallischen Rohrs (4) mit dem metallischen Eckverbinder (1) durch Schweißen.

10. Das Verfahren nach Anspruch 9,
bei dem beim Schweißen zumindest teilweise eine HV-Schweißnaht (12) erzeugt wird.

11. Das Verfahren nach einem der Ansprüche 9 und 10,
bei dem eine Wand des metallischen Rohrs (4) in dem an die Außenfläche (8) des Verbindungsbereichs (2) angrenzenden Teil eine Strukturierung (11) für eine Schweißnaht aufweist.

12. Vorrichtung mit:
- einem metallischen Eckverbinder (1) nach einem der Ansprüche 1 bis 8, und
- einem metallischen Rohr (4), das sich entlang einer Haupterstreckungsebene des metallischen Eckverbinders (1) erstreckt,
wobei
das metallische Rohr (4) mit dem metallischen Eckverbinder (1) durch eine Schweißnaht mechanisch stabil verbunden ist.

13. Vorrichtung nach Anspruch 12, die als Tragvorrichtung in einem Schienenfahrzeug eingerichtet und vorgesehen ist.

14. Schienenfahrzeug mit mindestens einem metallischen Eckverbinder (1) gemäß einem der Ansprüche 1 bis 8.

## Claims

1. Metal corner connector (1) having a first main surface (14) and a second main surface (15), each of which is aligned parallel to a main plane of extent of the metal corner connector (1), and having at least two connection regions (2), which are arranged on a lateral surface (3) of the metal corner connector (1),
**characterized in that**
- at least one of the connection regions (2) is designed to be connected in a mechanically stable manner, by welding, to a metal tube (4) extending along a main plane of extent of the metal corner connector (1),
- the connection region (2) comprises at least one projection (6) having a groove (7) which is designed to receive a welding material, and
- the connection region (2) has an outer surface (8) which is adjacent to the projection (6) and is in the form of a contact surface for an end face of the metal tube (4).

2. Metal corner connector (1) according to Claim 1,
**characterized in that**
the connection region (2) has an inner region (5) which is at least partially delimited by the projection (6), wherein a front surface (16) of the projection (6) extends in the same plane as a main surface (14, 15) of the metal corner connector (1) .

3. Metal corner connector (1) according to Claim 1,
**characterized in that**
the connection region (2) has an inner region (5) which is at least partially delimited by the projection (6), wherein a front surface (16) of the projection (6) is recessed in relation to a main surface (14, 15) of the metal corner connector (1).

4. Metal corner connector (1) according to Claim 1,
**characterized in that**
the projection (6) completely surrounds an inner region (5) of the connection region (2), and the groove (7) is formed around the entire periphery of the projection (6).

5. Metal corner connector (1) according to one of the preceding claims,
**characterized in that**
it comprises an extruded metal.

6. Metal corner connector (1) according to Claim 5,
**characterized in that**
it comprises an extruded aluminium alloy.

7. Metal corner connector (1) according to one of the preceding claims,
**characterized in that**
it has at least one opening (9), which passes completely through the metal corner connector (1) perpendicularly to the main plane of extent, wherein
the opening (9) is designed for the mechanical connection of the metal corner connector (1) to a further element by a connecting means.

8. Metal corner connector (1) according to one of the preceding claims,
**characterized in that**
it has at least one cutout (10), which passes completely through the metal corner connector (1) perpendicularly to the main plane of extent and is used for weight reduction purposes.

9. Method for producing a device, comprising the following steps:
- providing a metal corner connector (1) according to one of Claims 1 to 8,
- placing a metal tube (4) onto the connection region (2) of the metal corner connector (1), with the result that an end face of the metal tube (4) abuts the outer surface (8) of the connection region (2),
- connecting the metal tube (4) to the metal corner connector (1) in a mechanically stable manner, by welding.

10. Method according to Claim 9,
in which an HV weld seam (12) is at least partially created during the welding operation.

11. Method according to either of Claims 9 and 10,
in which, in the part which is adjacent to the outer surface (8) of the connection region (2), a wall of the metal tube (4) has a structured profile (11) for a weld seam.

12. Device having:
- a metal corner connector (1) according to one of Claims 1 to 8, and
- a metal tube (4) extending along a main plane of extent of the metal corner connector (1),
wherein
the metal tube (4) is connected to the metal corner connector (1) in a mechanically stable manner by a weld seam.

13. Device according to Claim 12, which is designed and provided as a support device in a rail vehicle.

14. Rail vehicle having at least one metal corner connector (1) according to one of Claims 1 to 8.

## Revendications

1. Raccord (1) angulaire métallique ayant une première surface (14) principale et une deuxième surface (15) principale, qui sont dirigées chacune parallèlement à un plan d'étendue principal du raccord (1) angulaire métallique et comprenant au moins deux parties (2) de liaison, qui sont disposées sur une surface (3) latérale du raccord (1) angulaire métallique,
**caractérisé en ce que**
- au moins l'une des parties (2) de liaison est conçue pour être reliée, d'une manière stable mécaniquement par soudure, à un tuyau (4) métallique, qui s'étend le long d'un plan d'étendue principal du raccord (1) angulaire métallique,
- la partie (2) de liaison comprend au moins une saillie (6) ayant une rainure (7), qui est conçue pour la réception d'un matériau de soudure, et
- la partie (2) de liaison a une surface (8) extérieure, qui est voisine de la saillie (6), et qui est conçue comme surface d'appui d'un côté frontal du tuyau (4) métallique.

2. Raccord (1) angulaire métallique suivant la revendication 1,
**caractérisé en ce que**
la partie (2) de liaison a une partie (5) intérieure, qui est délimitée au moins en partie par la saillie (6), dans lequel une surface (16), avant de la saillie (6), s'étend suivant un plan avec une surface (14, 15) principale du raccord (1) angulaire métallique.

3. Raccord (1) angulaire métallique suivant la revendication 1,
**caractérisé en ce que**
la partie (2) de liaison a une partie (5) intérieure, qui est délimitée au moins en partie par la saillie (6), dans lequel une surface (16) avant de la saillie (6) est disposée en retrait par rapport à une surface (14, 15) principale du raccord (1) angulaire métallique.

4. Raccord (1) angulaire métallique suivant la revendication 1,
**caractérisé en ce que**
la saillie (6) entoure complètement une partie (5) intérieure de la partie (2) de liaison et la rainure (7) est constituée en faisant tout le tour de la saillie (6).

5. Raccord (1) angulaire métallique suivant l'une des revendications précédentes,
**caractérisé en ce qu'**
il a du métal filé à la presse.

6. Raccord (1) angulaire métallique suivant la revendication 5,
**caractérisé en ce qu'**
il a un alliage aluminium filé à la presse.

7. Raccord (1) angulaire métallique suivant l'une des revendications précédentes,
**caractérisé en ce qu'**
il a au moins une ouverture (9), qui traverse entièrement le raccord (1) angulaire métallique perpendiculairement au plan d'étendue principal, dans lequel
l'ouverture (9) est conçue pour la liaison mécanique du raccord (1) angulaire métallique à un autre élément par l'intermédiaire d'un moyen de liaison.

8. Raccord (1) angulaire métallique suivant l'une des revendications précédentes,
**caractérisé en ce qu'**
il a au moins un évidement (10), qui traverse entièrement le raccord (1) angulaire métallique perpendiculairement à son plan d'étendue principal et qui sert à en réduire le poids.

9. Procédé de fabrication d'un dispositif comprenant les stades suivants :
- on se procure un raccord (1) angulaire métallique suivant l'une des revendications 1 à 8,
- on met un tuyau (4) métallique sur la partie (2) de liaison du raccord (1) angulaire métallique, de manière à ce qu'un côté frontal du tuyau (4) métallique s'appuie sur la surface (8) extérieure de la partie (2) de liaison,
- on relie, d'une manière stable mécaniquement le tuyau (4) métallique au raccord (1) angulaire métallique par soudure.

10. Procédé suivant la revendication 9,
dans lequel on produit, lors de la soudure, au moins en partie un cordon (12) de soudure HV.

11. Procédé suivant l'une des revendications 9 et 10,
dans lequel une paroi du tuyau (4) métallique a, dans la partie voisine de la surface (8) extérieure de la partie (2) de liaison, une structuration (11) pour un cordon de soudure.

12. Dispositif comprenant :
- un raccord (1) angulaire métallique suivant l'une des revendications 1 à 8, et
- un tuyau (4) métallique, qui s'étend le long d'un plan d'étendue principal du raccord (1) angulaire métallique,
dans lequel
- le tuyau (4) métallique est relié d'une manière stable mécaniquement par un cordon de soudure au raccord (1) angulaire métallique.

13. Dispositif suivant la revendication 12, qui est conçu et prévu comme dispositif de support dans un véhicule ferroviaire.

14. Véhicule ferroviaire ayant au moins un raccord (1) angulaire métallique suivant l'une des revendications 1 à 8.
